(19) **Europäisches Patentamt / European Patent Office / Office européen des brevets**

(11) **EP 4 398 112 B1**

(12) **EUROPEAN PATENT SPECIFICATION**

(45) Date of publication and mention
of the grant of the patent:
**24.09.2025 Bulletin 2025/39**

(21) Application number: **24172488.9**

(22) Date of filing: **25.04.2024**

(51) International Patent Classification (IPC):
**G06F 12/0802** (2016.01)     **G06F 12/0875** (2016.01)
**G06N 7/00** (2023.01)     **G06N 3/063** (2023.01)

(52) Cooperative Patent Classification (CPC):
**G06F 12/0802; G06F 12/0875; G06N 3/063;
G06N 7/00;** G06F 2212/454

(54) **APPARATUS AND METHOD OF PROCESSING DATA, ELECTRONIC DEVICE, AND STORAGE MEDIUM**

VORRICHTUNG UND VERFAHREN ZUR VERARBEITUNG VON DATEN, ELEKTRONISCHE VORRICHTUNG UND SPEICHERMEDIUM

APPAREIL ET PROCÉDÉ DE TRAITEMENT DE DONNÉES, DISPOSITIF ÉLECTRONIQUE ET SUPPORT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.04.2023 CN 202310484290**

(43) Date of publication of application:
**10.07.2024 Bulletin 2024/28**

(73) Proprietor: **KunlunXin Technology (Beijing) Company Limited**
**Haidian District**
**Beijing 100101 (CN)**

(72) Inventors:
- **SHAN, Liang**
  **Beijing, 100101 (CN)**
- **GAO, Daheng**
  **Beijing, 100101 (CN)**
- **LI, Yupeng**
  **Beijing, 100101 (CN)**

(74) Representative: **Nederlandsch Octrooibureau**
**P.O. Box 29720**
**2502 LS The Hague (NL)**

(56) References cited:
EP-B1- 3 230 874     CN-A- 115 145 837
US-A1- 2021 149 716     US-A1- 2023 014 565

EP 4 398 112 B1

**Description**

TECHNICAL FIELD

The present disclosure relates to a field of artificial intelligence technology, and in particular to a field of chip technology. More specifically, the present disclosure provides an apparatus and a method of processing data, an electronic device, and a storage medium.

BACKGROUND

With a development of artificial intelligence technology, it is possible to adjust an operator of a deep learning model according to hardware resources of an artificial intelligence chip.

US 2021/149716 A1 discloses systems and methods for scheduling thread order to improve cache efficiency. In one embodiment, a graphics processor includes processing resources and schedule and dispatch logic to schedule and dispatch threads to the processing resources. The schedule and dispatch logic is configured to receive threads, to schedule and dispatch the threads based on a forward thread dispatch having a forward thread order, and to determine whether to disable a reversing of a thread order upon completion of at least a portion of the forward thread dispatch including a completion or ending of a draw call or a dispatch.

SUMMARY

The present disclosure provides an apparatus and a method of processing data, a device, and a storage medium. The invention is defined by the appended claims.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

The accompanying drawings are used for better understanding of the solution and do not constitute a limitation to the present disclosure. In the accompanying drawings:

FIG. 1 shows a schematic block diagram of an apparatus of processing data according to an embodiment of the present disclosure;

FIG. 2A shows a schematic diagram of a first initial shape information according to an embodiment of the present disclosure;

FIG. 2B shows a schematic diagram of a second shape information according to an embodiment of the present disclosure;

FIG. 2C shows a schematic diagram of a third shape information according to an embodiment of the present disclosure;

FIG. 3 shows a schematic diagram of an electronic device according to an embodiment of the present disclosure;

FIG. 4 shows a flowchart of a method of processing data according to an embodiment of the present disclosure; and

FIG. 5 shows a block diagram of an electronic device to which a method of processing data may be applied according to an embodiment of the present disclosure.

DETAILED DESCRIPTION OF EMBODIMENTS

Some operators of a deep learning model may be memory-intensive operators. The memory-intensive operator may include, for example, a General Matrix Multiplication (GEMM) operator.

The general matrix multiplication operator may be related to a multiplicand matrix A, a multiplier matrix B, and a result matrix C. A calculation process of the general matrix multiplication operator may be implemented as Equation (1).

$$C = A \times B \qquad (1)$$

The multiplicand matrix A may have a shape of m $\times$ k, the multiplier matrix B may have a shape of k $\times$ n, and the result matrix C may have a shape of m $\times$ n. The multiplicand matrix A and the multiplier matrix B may respectively serve as two input matrices for the general matrix multiplication operator.

In some embodiments, either input matrix may be decomposed to obtain a plurality of sub-matrices of that input matrix.

For example, the multiplicand matrix A may be decomposed into a plurality of sub-matrices. A plurality of storage spaces may be determined in Level 1 Cache (L1 Cache) to store the sub-matrices of the multiplicand matrix A, the multiplier matrix B, and the result matrix C. In this way, it is possible to improve a utilization rate of the L1 Cache and reduce an access to an original matrix in an external storage unit (for example, a video memory).

The sub-matrix of the multiplicand matrix A may have a shape of, for example, l_m $\times$ k. The sub-matrix of the multiplicand matrix A may be stored in a storage space of the L1 Cache. The plurality of sub-matrices may be multiplied with the multiplier matrix B, and a memory access cost parameter value LS_A may be expressed as Equation (2).

$$LS\_A = m * k + n * k * \left\lceil \frac{m}{l\_m} \right\rceil + m * n \qquad (2)$$

It may be understood that if a data size for each element in the matrix is determined, a product of the memory access cost parameter value and the data size may be determined as a memory access cost. The data size for each element may be, for example, 32 bits.

For example, the multiplier matrix B may be decomposed into a plurality of sub-matrices. A plurality of storage spaces may be determined in the L1 Cache to store the multiplicand matrix A, the sub-matrices of the multiplier matrix B, and the result matrix C. In this way, it is also possible to improve the utilization rate of the L1 Cache and reduce an access to an original matrix in an external storage unit (for example, a video memory).

The sub-matrix of the multiplier matrix B may have a shape of, for example, k $\times$ l_n. The sub-matrix of the multiplier matrix B may be stored in a storage space of L1 Cache. The plurality of sub-matrices may be multiplied with the multiplicand matrix A, and a memory access cost parameter value LS_B may be expressed as Equation (3).

$$LS\_B = n * k + m * k * \left\lceil \frac{n}{l\_n} \right\rceil + m * n \qquad (3)$$

Therefore, in a case of decomposing one input matrix, a minimum memory access cost parameter value LS_AorB may be expressed as Equation (4).

$$LS\_AorB = min(m * k + n * k * \left\lceil \frac{m}{l\_m} \right\rceil, n * k + m * k * \left\lceil \frac{n}{l\_n} \right\rceil) + m * n \qquad (4)$$

However, in the case of decomposing only one input matrix, it may be difficult to store the undecomposed matrix in the L1 cache, and it may be required to repeatedly access the undecomposed matrix multiple times from the external storage unit, resulting in an increase in the memory access costs. In addition, the storage space corresponding to the result matrix is not fully utilized, resulting in underutilization of the storage space.

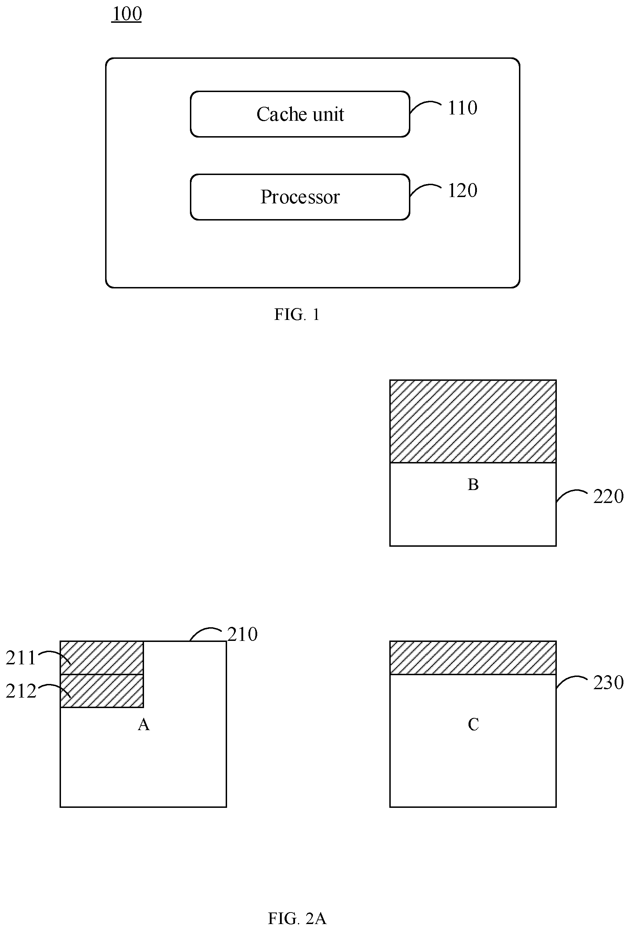

FIG. 1 shows a schematic block diagram of an apparatus of processing data according to an embodiment of the present disclosure.

As shown in FIG. 1, an apparatus 100 includes a cache unit 110 and a processor 120.

The cache unit 110 includes a plurality of storage spaces. In embodiments of the present disclosure, the plurality of storage spaces may respectively correspond to a plurality of matrices. For example, the plurality of storage spaces may include a storage space L1A, a storage space L1B, and a storage space L1C, which may correspond to the multiplicand matrix A, the multiplier matrix B, and the result matrix C mentioned above, respectively.

The processor 120 is configured to determine l groups of storage space from the plurality of storage spaces. The storage spaces in each of the l groups of storage space include a first storage space and a second storage space. l is an integer greater than or equal to 1. For example, if there are three matrices, l may be 6. It may be understood that three matrices are just an example. The number of the plurality of matrices may also be two, four or more.

The processor 120 is configured to perform the following operations on each group of storage space to obtain a plurality of first initial memory access costs corresponding to the group of storage space: determining a plurality of first initial shape information according to a shape of a first matrix and a capacity of the first storage space; determining at least one second shape information according to each of the plurality of first initial shape information; and determining a plurality of first initial memory access costs according to a plurality of second shape information and the plurality of first initial shape information.

The first matrix is a matrix corresponding to the first storage space. Taking a case that the matrix corresponding to the first storage space is the multiplicand matrix A as an example, the first storage space may be the storage space L1A. A plurality of first initial shape information may be determined according to the shape of the multiplicand matrix A and the capacity of the storage space L1A. A data size of a sub-matrix corresponding to the first initial shape information is less than or equal to the capacity of the first storage space. The first initial shape information may include a first initial number of rows and a first initial number of columns. For example, for the multiplicand matrix A, if the number of rows m=20 and the number of columns k=20, at least two first initial shape information may be determined. A first initial shape information large_A1 may include a first initial number of rows large_am1 and a first initial number of columns large_ak1. The first initial number of rows large_am1 may be 4, and the first initial number of columns large_ak1 may be 5. A first initial shape information large_A2 may include a first initial number of rows large_am2 and a first initial number of columns large_ak2. The first initial number of rows large_am2 may be 2, and the first initial number of columns large_ak2 may be 10.

The second shape information is related to a second matrix, and the second matrix is a matrix corresponding to the second storage space. Taking a case that the matrix corresponding to the second storage space is the multiplier matrix B as an example, the second storage space may be the storage space L1B. A plurality of second shape information may be determined according to the shape of the multiplier matrix B and the capacity of the storage space L1B. A data size of a sub-matrix corresponding to the second shape information is less than or equal to the capacity of the second storage space. The second shape information may include a second number of rows and a second number of columns. For example, for the multiplier matrix B, if the number of rows k=20 and the number of columns n=20, at least two second shape information may be determined according to the first initial shape information large_A2. A second shape information little_B1 may include a second number of rows little_bk1 and a second number of columns little_bn1. The second number of rows little_bk1 may be 2, and the second number of columns little_bn1 may be 5. A second shape information little_B2 may include a second number of rows little_bk2 and a second number of columns little_bn2. The second number of rows little_bk2 may be 5, and the second number of columns little_bn2 may be 4.

In embodiments of the present disclosure, a first initial memory access cost may be obtained according to the shape of the first matrix, the shape of the second matrix, the shape of the third matrix, the first initial shape information, and the second shape information. For example, in a case that the first matrix is the multiplicand matrix A mentioned above and the second matrix is the multiplier matrix B mentioned above, the third matrix may be the result matrix C mentioned above. A memory access cost parameter value LS_A2B1 may be determined according to the respective shapes of the three matrices, the first initial shape information large_A2, and the second shape information little_B1. The memory access cost may be determined according to the memory access cost parameter value.

The processor 120 is further configured to determine a target memory access cost from all the first initial memory access costs of the I groups of storage space. For example, if I=6, different memory access costs may be determined from different groups of storage space. A minimum memory access cost may serve as the target memory access cost.

According to embodiments of the present disclosure, at least two matrices in a plurality of matrices related to matrix multiplication operators are split, so that the memory access costs may be reduced effectively, which may help to improve an execution efficiency of matrix multiplication operators, and then improve an efficiency of the apparatus of processing data.

It may be understood that the apparatus of processing data of the present disclosure has been described above, and the processor of the present disclosure will be further described below with reference to FIG. 2A to FIG. 2C.

FIG. 2A shows a schematic diagram of a first initial shape information according to an embodiment of the present disclosure.

As shown in FIG. 2A, a multiplicand matrix A 210 may have a shape of m × k, a multiplier matrix B 220 may have a shape of k × n, and a result matrix C 230 may have a shape of m × n. For example, m=10, n=10, k=10.

In embodiments of the present disclosure, the processor may be configured to perform the following operations on each group of storage space: determining a plurality of first initial shape information according to the shape of the first matrix and the capacity of the first storage space. Taking a case that the first matrix is the multiplicand matrix A 210 as an example, the first initial shape information large_A3 may include a first initial number of rows large_am3 and a first initial number of columns large_ak3. The first initial number of rows large_am3 may be 2, for example, and the first initial number of columns large_ak3 may be 5, for example. A first initial sub-matrix 211 and a first initial sub-matrix 212 that correspond to the first initial shape information large_A3 are shown in FIG. 2A. A data size of the first initial sub-matrix may be consistent with, for example, the storage space L1A, so that a cache space provided for the original matrix may be fully utilized. According to embodiments of the present disclosure, the cache space provided for the first matrix may be fully utilized, which may help to improve the utilization rate of the cache space.

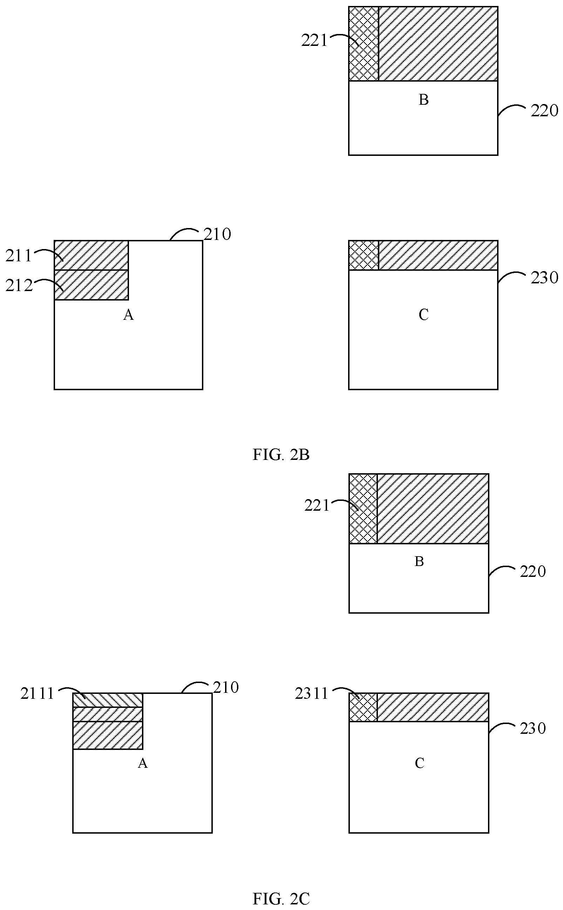

As shown in FIG. 2A, based on the first initial shape information large_A3, a maximum second number of rows of a second initial sub-matrix of the multiplier matrix B 220 may be large_ak3, and a maximum second number of columns may be n. A data size of the second initial sub-matrix is possibly greater than the capacity of the second storage space. In order to further utilize the storage resources of the cache unit efficiently, it is possible to determine the second shape information related to the second matrix, which will be described below with reference to FIG. 2B.

FIG. 2B shows a schematic diagram of the second shape information according to an embodiment of the present disclosure.

In embodiments of the present disclosure, the processor may be configured to perform the following operations on each group of storage space: determining at least one second shape information according to each first initial shape information. For example, at least one second shape information may be determined according to each first initial shape information and the capacity of the second storage space. Taking a case that the second matrix is the multiplier matrix B 220 as an example, a second shape information little_B3 may be determined according to the first initial number of columns large_ak3 of the first initial shape information large_A3 and the capacity of the second storage space. The second shape information little_B3 may include a second number of rows little_bk3 and a second number of columns little_bn3. The second number of rows little_bk3 may be 5, and the second number of columns little_bn3 may be 2. A second sub-matrix 221 corresponding to the second shape information little_B3 is shown in FIG. 2B.

Then, in embodiments of the present disclosure, the processor may be configured to perform the following operations on each group of storage space: determining a plurality of first initial memory access costs according to a plurality of second shape information and the plurality of first initial shape information. For example, in a case that the first matrix is the multiplicand matrix A 210, if the first sub-matrices are respectively loaded multiple times according to the first initial shape information large_A3, the total memory access costs of the first matrix may not change, and the memory access cost parameter value Load_A may be expressed as Equation (5).

$$Load\_A = m * k \qquad\qquad (5)$$

As mentioned above, m=k=10, then the memory access cost parameter value Load_A may be 100.

In a case that the second matrix is the multiplier matrix B 220, if the second sub-matrix is loaded according to the second shape information little_B3, then according to a matrix multiplication rule, the first initial sub-matrix may be multiplied by the second sub-matrix 221, and the second initial sub-matrix 212 may also be multiplied by the second sub-matrix 221. Therefore, the second sub-matrix 221 may be reused. In this case, the memory access cost parameter value Load_B may be expressed as Equation (6).

$$Load\_B = n * k * \left\lceil \frac{m}{large\_m} \right\rceil - little\_n * little\_k * \left( \left\lceil \frac{m}{large\_m} \right\rceil - 1 \right) * \left\lceil \frac{k}{large\_k} \right\rceil \quad (6)$$

Taking a case that little_k is the second number of rows little_bk3, little_n is the second number of columns little_bn3, large_m is the first initial number of rows large_am3 and large_k is the first initial number of columns large_ak3 as an example, if m=k=n=10, little_bk3=5, little_bn3=2, large_am3=2 and large_ak3=5, then the memory access cost parameter value Load_B may be 420.

In a case that the third matrix is the result matrix C 230 and the third storage space has a sufficient capacity, the total memory access costs of the third matrix may not change, and a memory access cost parameter value Store_C may be expressed as Equation (7).

$$Store\_C = m * n \qquad\qquad (7)$$

As mentioned above, m=n=10, then the memory access cost parameter value Store_C may be 100.

For the first matrix A 210, the second matrix B 220 and the third matrix C 230, the total memory access cost parameter value LS_ABC may be expressed as Equation (8).

$$LS\_ABC = Load\_A + Load\_B + Store\_C \qquad\qquad (8)$$

In a case of Load_A=100, Load_B=420 and Store_C=100, the total memory access cost parameter value LS_ABC may be 620. An initial memory access cost may be determined according to the total memory access cost parameter value and the data size for each element of the matrix.

For another example, if only the multiplicand matrix A is decomposed, then in a case of m=k=n=10 and l_m=2, it may be determined that the total memory access cost parameter value LS_A is 700 according to Equation (2). Therefore, decomposing at least two matrices may effectively reduce the memory access cost and improve the memory access efficiency.

It may be understood that the first initial memory access cost may be determined above based on the first initial shape information large_A3 and the second shape information little_B3. In embodiments of the present disclosure, a plurality of first initial memory access costs may be determined according to a plurality of first initial shape information and a plurality of second shape information.

In order to further improve the execution efficiency of matrix multiplication, the first initial sub-matrix may be further split, so that matrix multiplication operations may be performed in parallel. A further explanation will be given below with reference to FIG. 2C.

FIG. 2C shows a schematic diagram of a third shape information according to an embodiment of the present disclosure.

In embodiments of the present disclosure, the processor may be further configured to perform the following operations on each group of storage space: determining a plurality of first target shape information according to the plurality of second shape information and the plurality of first initial shape information. For example, the first initial shape information corresponds to at least one first target shape information. A first target shape information corresponding to a first initial shape information may be determined according to the first initial shape information and a second shape information corresponding to the first initial shape information. As shown in FIG. 2C, in a case that the second number of rows little_bk3 of the second shape information little_B3 is 5, at least one first target shape information of the first initial shape information large_A3 may be determined. The at least one first target shape information may include, for example, a first target shape information little_A31 and a first target shape information little_A32. The first target shape information little_A31 may include a first target number of rows little_am31 (for example, 1) and a first target number of columns little_ak31 (for example, 5). The first target shape information little_A32 may include a first target number of rows little_am32 (for example, 2) and a first target number of columns little_ak32 (for example, 5). A first target sub-matrix 2111 corresponding to the first target shape information little_A31 is shown in FIG. 2C. According to embodiments of the present disclosure, the first sub-matrix may be further split, and matrix multiplication operations may be performed in parallel based on load_compute_store parallel technology, which may help to improve the execution efficiency of the apparatus of processing data.

In embodiments of the present disclosure, the processor may be further configured to perform the following operations on each group of storage space: determining at least one second initial memory access cost from the plurality of first initial memory access costs corresponding to each group of storage space, according to the plurality of first target shape information.

For example, the processor may be further configured to perform the following operations on each group of storage space: determining a plurality of third shape information according to the plurality of second shape information and the plurality of first target shape information. The plurality of third shape information is related to a third matrix, and the third matrix is a matrix corresponding to a third storage space in each group of storage space. In a case that the third matrix is the result matrix C 230, a third shape information little_C32 may be determined according to the second shape information little_B3 and the first target shape information little_A32. A third sub-matrix 2311 corresponding to the third shape information little_C32 is shown in FIG. 2C.

For example, the processor may be further configured to perform the following operations on each group of storage space: determining at least one second initial memory access cost from the plurality of first initial memory access costs according to the plurality of first target shape information and a plurality of third shape information. The at least one second initial memory access cost may be determined from the plurality of first initial memory access costs based on the parameters of the storage unit, the first target shape information, and the plurality of third shape information, so as to meet storage alignment constraints, comply with storage characteristics, and avoid storage channel conflicts. The storage unit may be, for example, a video memory. According to embodiments of the present disclosure, the shape of the matrix corresponding to the second memory access cost may be matched with the storage unit, which helps to improve the stability of the apparatus of processing data.

It may be understood that the case that the first matrix is the multiplicand matrix A and the second matrix is the multiplier matrix B is illustrated above by way of example in describing the present disclosure. However, the present disclosure is not limited to this. In a case that the first matrix is the multiplicand matrix A, the second matrix may also be the result matrix C, which will be further described below.

In embodiments of the present disclosure, for example, after the first initial shape information large_A3 is determined, the processor may be configured to perform the following operations on each group of storage space: determining at least one second shape information according to each of the plurality of first initial shape information. For example, in a case that the second matrix is the result matrix C, according to the first initial number of rows large_am3 of the first initial shape information large_A3, a maximum second number of rows of the second sub-matrix of result matrix C may be large_am3, and a maximum second number of columns may be n. The second shape information little_C3 may be determined according to the first initial number of rows large_am3 of the first initial shape information large_A3 and the capacity of the second storage space. The second shape information little_C3 may include a second number of rows little_cm3 and a second number of columns little_cn3. The second number of rows little_cm3 may be less than or equal to the first initial number of rows large_am3, and the second number of columns little_cn3 may be less than n.

The first initial memory access cost may be determined according to the first initial shape information large_A3 and the second shape information little_C3.

Then, in order to perform matrix multiplication operations in parallel, the first initial sub-matrix may be further split. In embodiments of the present disclosure, the processor may be further configured to perform the following operations on each group of storage space: determining a plurality of first target shape information according to the plurality of second shape information and the plurality of first initial shape information. For example, at least one first target shape information of the first initial shape information large_A3 may be determined according to the second number of rows little_cm3 of the second shape information little_C3. The at least one first target shape information may include, for example, a first target shape information little_A33 and a first target shape information little_A34. The first target shape information little_A33 may include a first target number of rows little_am33 and a first target number of columns little_ak33. The first target shape information little_A34 may include a first target number of rows little_am34 and a first target number of columns little_ak34. The first target number of rows may be less than or equal to the second number of rows. The first target number of columns may be less than the first initial number of columns.

In embodiments of the present disclosure, the processor may be further configured to perform the following operations on each group of storage space: determining a plurality of third shape information according to the plurality of second shape information and the plurality of first target shape information. For example, in a case that the third matrix is the multiplier matrix B, a third shape information little_B34 may be determined according to the second shape information little_C3 and the first target shape information little_A34. A third number of rows little_bk34 of the third shape information little_B34 may be consistent with, for example, the first target number of columns little_ak34 of the first target shape information little_A34. A third number of columns little_bn34 of the third shape information little_B34 may be consistent with, for example, the second number of columns little_cn3 of the second shape information little_C3.

It may be understood that the case that the first matrix is the multiplicand matrix A is illustrated above by way of example in describing the present disclosure. However, the present disclosure is not limited to this. The first matrix may also be the multiplier matrix B or the result matrix C. A case that the first matrix is the multiplier matrix B will be illustrated below by way of example to further describe the present disclosure.

In embodiments of the present disclosure, the processor may be configured to perform the following operations on each group of storage space: determining a plurality of first initial shape information according to the shape of the first matrix and the capacity of the first storage space. In the case that the first matrix is the multiplier matrix B, the first initial shape information large_B4 may include a first initial number of rows large_bk4 and a first initial number of columns large_bn4. A data size of the first initial sub-matrix corresponding to the first initial shape information large_B4 may be consistent with, for example, the storage space L1B, so that the cache space provided for the original matrix may be fully utilized.

In embodiments of the present disclosure, the processor may be configured to perform the following operations on each group of storage space: determining at least one second shape information according to each first initial shape information. For example, at least one second shape information may be determined according to each first initial shape information and the capacity of the second storage space. Taking a case that the second matrix is the multiplicand matrix A as an example, based on the first initial shape information large_B4, a maximum second number of rows in the second sub-matrix of the multiplicand matrix A may be m, and a maximum second number of columns may be large_bk4. A second shape information little_A4 may be determined according to the first initial number of rows large_bk4 of the first initial shape information large_B4 and the capacity of the second storage space. The second shape information little_A4 may include a second number of rows little_am4 and a second number of columns little_ak4. The second number of columns little_ak4 may be less than or equal to the first initial number of rows large_bk4. The second number of rows little_am3 may be less than m.

Then, in order to perform matrix multiplication operations in parallel, the first initial sub-matrix may be further split. In embodiments of the present disclosure, the processor may be further configured to perform the following operations on each group of storage space: determining a plurality of first target shape information according to the plurality of second shape information and the plurality of first initial shape information. For example, at least one first target shape information of the first initial shape information large_B4 may be determined according to the second number of columns little_ak4 of the second shape information little_A4. The at least one first target shape information may include, for example, a first target shape information little_B41 and a first target shape information little_B42. The first target shape information little_B41 may include a first target number of rows little_bk41 and a first target number of columns little_bn41. The first target shape information little_B42 may include a first target number of rows little_bk42 and a first target number of columns little_bn42. The first target number of columns may be less than the first initial number of columns. The first target number of rows may be less than or equal to the second number of columns.

In embodiments of the present disclosure, the processor may be further configured to perform the following operations on each group of storage space: determining a plurality of third shape information according to the plurality of second shape information and the plurality of first target shape information. For example, in a case that the third matrix is the result matrix C, a third shape information little_C41 may be determined according to the second shape information little_A4 and the first target shape information little_B41. A third number of columns little_cn41 of the third shape information little_C41 may be consistent with, for example, the first target number of columns little_bn41 of the first target shape information little_B41. A third number of rows little_cm41 of the third shape information little_C41 may be consistent with, for example, the second number of rows little_am4 of the second shape information little_A4.

It may be understood that the case that the first matrix is the multiplier matrix B and the second matrix is the multiplicand matrix A is illustrated above by way of example in describing the present disclosure. However, the present disclosure is not limited to this. In the case that the first matrix is the multiplier matrix B, the second matrix may also be the result matrix C, which will be further described below.

In embodiments of the present disclosure, for example, after the first initial shape information large_B4 is determined, the processor may be configured to perform the following operations on each group of storage space: determining at least one second shape information according to each of the plurality of first initial shape information. For example, in a case that the second matrix is the result matrix C, according to the first initial number of columns large_bn4 of the first initial shape information large_B4, a maximum second number of rows of the second sub-matrix of the result matrix C may be m, and a maximum second number of columns may be large_bn4. A second shape information little_C4 may be determined according to the first initial number of columns large_bn4 of the first initial shape information large_B4 and the capacity of the second storage space. The second shape information little_C4 may include a second number of rows little_cm4 and a second number of columns little_cn4. The second number of rows little_cm3 may be less than m. The second number of columns little_cn3 may be less than or equal to the second number of columns little_cn4.

The first initial memory access cost may be determined according to the first initial shape information large_B4 and the second shape information little_C4.

Then, in order to perform matrix multiplication operations in parallel, the first initial sub-matrix may be further split. In embodiments of the present disclosure, the processor may be further configured to perform the following operations on each group of storage space: determining a plurality of first target shape information according to the plurality of second shape information and the plurality of first initial shape information. For example, at least one first target shape information of the first initial shape information large_B4 may be determined according to the second number of columns little_cn4 of the second shape information little_C4. The at least one first target shape information may include, for example, a first target shape information little_B43 and a first target shape information little_B44. The first target shape information little_B43 may include a first target number of rows little_bk43 and a first target number of columns little_bn43. The first target shape information little_B44 may include a first target number of rows little_bk44 and a first target number of columns little_bn44. The first target number of columns may be less than or equal to the second number of columns. The first target number of rows may be less than the first initial number of rows.

In embodiments of the present disclosure, the processor may be further configured to perform the following operations on each group of storage space: determining a plurality of third shape information according to the plurality of second shape information and the plurality of first target shape information. For example, in a case that the third matrix is the multiplicand matrix A, a third shape information little_A44 may be determined according to the second shape information little_C4 and the first target shape information little_B44. A third number of rows little_am44 of the third shape information little_A44 may be consistent with, for example, the second number of rows little_cm4 of the second shape information little_C4. A third number of columns little_ak44 of the third shape information little_A44 may be consistent with, for example, the first target number of rows little_bk44 of the first target shape information little_B44.

It may be understood that the case that the first matrix is the multiplicand matrix A or the multiplier matrix B is illustrated above by way of example in describing the present disclosure. However, the present disclosure is not limited to this. The first matrix may also be the result matrix C, which will be further described below.

In embodiments of the present disclosure, the processor may be configured to perform the following operations on each group of storage space: determining a plurality of first initial shape information according to the shape of the first matrix and the capacity of the first storage space. In the case that the first matrix is the result matrix C, the first initial shape information large_C5 may include a first initial number of rows large_cm5 and a first initial number of columns large_cn5. A data size of the first initial sub-matrix of the result matrix C may be consistent with, for example, the storage space L1C, so that the cache space provided for the original matrix may be fully utilized.

In embodiments of the present disclosure, the processor may be configured to perform the following operations on each group of storage space: determining at least one second shape information according to each first initial shape information. For example, at least one second shape information may be determined according to each first initial shape information and the capacity of the second storage space. Taking a case that the second matrix is the multiplicand matrix A as an example, based on the first initial shape information large_C5, a maximum second number of rows in the second sub-matrix of the multiplicand matrix A may be large_cm5, and a maximum second number of columns may be k. A second shape information little_A5 may be determined according to the first initial number of rows large_cm5 of the first initial shape information large_C5 and the capacity of the second storage space. The second shape information little_A5 may include a second number of rows little_am5 and a second number of columns little_ak5. The second number of rows little_am5 may be less than or equal to the first initial number of rows large_cm5. The second number of columns little_ak5 may be less than k.

Then, in order to perform matrix multiplication operations in parallel, the first initial sub-matrix may be further split. In embodiments of the present disclosure, the processor may be further configured to perform the following operations on each group of storage space: determining a plurality of first target shape information according to the plurality of second shape information and the plurality of first initial shape information. For example, at least one first target shape information of the first initial shape information large_C5 may be determined according to the second number of rows little_am5 of the second shape information little_A5. The at least one first target shape information may include, for example, a first target shape information little_C51 and a first target shape information little_C52. The first target shape information little_C51 may include a first target number of rows little_cm51 and a first target number of columns little_cn51. The first target shape information little_C52 may include a first target number of rows little_cm52 and a first target number of columns little_cn52. The first target number of columns may be less than the first initial number of columns. The first target number of rows may be less than or equal to the second number of rows.

In embodiments of the present disclosure, the processor may be further configured to perform the following operations on each group of storage space: determining a plurality of third shape information according to the plurality of second shape information and the plurality of first target shape information. For example, in a case that the third matrix is the multiplier matrix B, a third shape information little_B51 may be determined according to the second shape information little_A5 and the first target shape information little_C51. A third number of columns little_bn51 of the third shape information little_B51 may be consistent with, for example, the first target number of columns little_cn51 of the first target shape information little_C51. A third number of rows little_bk51 of the third shape information little_B51 may be consistent with, for example, the second number of columns little_ak5 of the second shape information little_A5.

It may be understood that the case that the first matrix is the result matrix C and the second matrix is the multiplicand matrix A is illustrated above by way of example in describing the present disclosure. However, the present disclosure is not limited to this. In the case that the first matrix is the result matrix C, the second matrix may also be the multiplier matrix B, which will be further described below.

In embodiments of the present disclosure, for example, after the first initial shape information large_C5 is determined, the processor may be configured to perform the following operations on each group of storage space: determining at least one second shape information according to each of the plurality of first initial shape information. For example, in a case that the second matrix is the multiplier matrix B, according to the first initial number of columns large_cn5 of the first initial shape information large_C5, a maximum second number of rows of the second sub-matrix of the multiplier matrix B may be k, and a maximum second number of columns may be large_cn5. A second shape information little_B5 may be determined according to the first initial number of columns large_cn5 of the first initial shape information large_C5 and the capacity of the second storage space. The second shape information little_B5 may include a second number of rows little_bk5 and a second number of columns little_bn5. The second number of rows little_bk5 may be less than k, and the second number of columns little_bn5 may be less than or equal to the first initial number of columns large_cn5.

The first initial memory access cost may be determined according to the first initial shape information large_C5 and the second shape information little_B5.

Then, in order to perform matrix multiplication operations in parallel, the first initial sub-matrix may be further split. In embodiments of the present disclosure, the processor may be further configured to perform the following operations on each group of storage space: determining a plurality of first target shape information according to the plurality of second shape information and the plurality of first initial shape information. For example, at least one first target shape information of the first initial shape information large_C5 may be determined according to the second number of columns little_bn5 of the second shape information little_B5. The at least one first target shape information may include, for example, a first target shape information little_C53 and a first target shape information little_C54. The first target shape information little_C53 may include a first target number of rows little_cm53 and a first target number of columns little_cn53. The first target shape information little_C54 may include a first target number of rows little_cm54 and a first target number of columns little_cn54. The first target number of columns may be less than or equal to the second number of columns. The first target number of rows may be less than the first initial number of rows.

In embodiments of the present disclosure, the processor may be further configured to perform the following operations on each group of storage space: determining a plurality of third shape information according to the plurality of second shape information and the plurality of first target shape information. For example, in a case that the third matrix is the multiplicand matrix A, a third shape information little_A54 may be determined according to the second shape information little_B5 and the first target shape information little_C54. A third number of columns little_ak54 of the third shape information little_A54 may be consistent with, for example, the second number of rows little_bk5 of the second shape information little_B5. A third number of rows little_am54 of the third shape information little_A54 may be consistent with, for example, the first target number of rows little_cm54 of the first target shape information little_C54.

It may be understood that some methods for determining the shape of each matrix have been described above. A description of some methods for determining the target memory access cost will be provided below with reference to relevant embodiments.

In some embodiments, the processor may be further configured to: determine a target memory access cost from all second initial memory access costs of the I groups of storage space. For example, a minimum second initial memory access cost may serve as the target memory access cost.

It may be understood that some methods for determining the target memory access cost is described above. A description of some methods for performing matrix multiplication operations will be provided below.

In embodiments of the present disclosure, a matrix multiplication operation may be performed according to the first target shape information corresponding to the target memory access cost, the second shape information corresponding to the target memory access cost, and the third shape information corresponding to the target memory access cost. The first matrix corresponding to the target memory access cost may be used as a first target matrix. The second matrix corresponding to the target memory access cost may be used as a second target matrix. The third matrix corresponding to the target memory access cost may be used as a third target matrix.

In embodiments of the present disclosure, the processor may be further configured to: in a case that the third target matrix is the result matrix, load a first sub-matrix of the first target matrix into the first storage space according to the first target shape information corresponding to the target memory access cost; load a second sub-matrix of the second target matrix into the second storage space according to the second shape information corresponding to the target memory access cost; perform a matrix multiplication operation on the first sub-matrix and the second sub-matrix to obtain a third sub-matrix of the third target matrix; and write the third sub-matrix into the third storage space.

For example, the first target shape information corresponding to the target memory access cost, the second shape information corresponding to the target memory access cost and the third shape information corresponding to the target memory access cost may be respectively the first target shape information little_A32, the second shape information little_B3 and the third shape information little_C32 mentioned above. The first sub-matrix of the multiplicand matrix A may be loaded into the storage space L1A according to the first target shape information little_A32 corresponding to the target memory access cost. The shape of the first sub-matrix may be consistent with the first target shape information little_A32. The second sub-matrix of the second target matrix may be loaded into the storage space L1B according to the second shape information little_B3 corresponding to the target memory access cost. The shape of the second sub-matrix may be consistent with the second shape information little_B3. A matrix multiplication operation may be performed on the first sub-matrix and the second sub-matrix to obtain a third sub-matrix of the result matrix C. The shape of the third sub-matrix may be consistent with the third shape information little_C32. The third sub-matrix may be written into the storage space L1C.

For another example, the first target shape information corresponding to the target memory access cost, the second shape information corresponding to the target memory access cost and the third shape information corresponding to the target memory access cost may be respectively the first target shape information little_B41, the second shape information little_A4 and the third shape information little_C41. The first sub-matrix of the multiplier matrix B may be loaded into the storage space L1B according to the first target shape information little_B41 corresponding to the target memory access cost. The shape of the first sub-matrix may be consistent with the first target shape information little_B41. The second sub-matrix of the second target matrix may be loaded into the storage space L1A according to the second shape information little_A4 corresponding to the target memory access cost. The shape of the second sub-matrix may be consistent with the second shape information little_A4. A matrix multiplication operation may be performed on the first sub-matrix and the second sub-matrix to obtain a third sub-matrix of the result matrix C. The shape of the third sub-matrix may be consistent with the third shape information little_C41. The third sub-matrix may be written into the storage space L1C.

In embodiments of the present disclosure, the processor may be further configured to: in a case that the first target matrix is the result matrix, load the third sub-matrix of the third target matrix into the third storage space according to the third shape information corresponding to the target memory access cost; load the second sub-matrix of the second target matrix into the second storage space according to the second shape information corresponding to the target memory access cost; perform a matrix multiplication operation on the third sub-matrix and the second sub-matrix to obtain a first sub-matrix of the first target matrix; and write the first sub-matrix into the first storage space.

For example, the first target shape information corresponding to the target memory access cost, the second shape information corresponding to the target memory access cost and the third shape information corresponding to the target memory access cost may be respectively the first target shape information little_C51, the second shape information little_A5 and the third shape information little_B51. The third sub-matrix of the multiplier matrix B may be loaded into the storage space L1B according to the third shape information little_B51 corresponding to the target memory access cost. The shape of the third sub-matrix may be consistent with the third shape information little_B51. The second sub-matrix of the multiplicand matrix A may be loaded into the storage space L1A according to the second shape information little_A5 corresponding to the target memory access cost. The shape of the second sub-matrix may be consistent with the second shape information little_A5. A matrix multiplication operation may be performed on the first sub-matrix and the second sub-matrix to obtain a first sub-matrix of the result matrix C. The shape of the first sub-matrix may be consistent with the first target shape information little_C51. The first sub-matrix may be written into the storage space L1C.

For example, the first target shape information corresponding to the target memory access cost, the second shape information corresponding to the target memory access cost and the third shape information corresponding to the target memory access cost may be respectively the first target shape information little_C54, the second shape information little_B5 and the third shape information little_A54. The third sub-matrix of the multiplicand matrix A may be loaded into the storage space L1A according to the third shape information little_A54 corresponding to the target memory access cost. The shape of the third sub-matrix may be consistent with the third shape information little_A54. The second sub-matrix of the multiplier matrix B may be loaded into the storage space L1B according to the second shape information little_B5 corresponding to the target memory access cost. The shape of the second sub-matrix may be consistent with the second shape information little_B5. A matrix multiplication operation may be performed on the first sub-matrix and the second sub-matrix to obtain a first sub-matrix of the result matrix C. The shape of the first sub-matrix may be consistent with the first target shape information little_C54. The first sub-matrix may be written into the storage space L1C.

In embodiments of the present disclosure, the processor may be further configured to: in a case that the second target matrix is the result matrix, load the first sub-matrix of the first target matrix into the first storage space according to the first target shape information corresponding to the target memory access cost; load the third sub-matrix of the third target matrix into the third storage space according to the third shape information corresponding to the target memory access cost; perform a matrix multiplication operation on the first sub-matrix and the third sub-matrix to obtain a second sub-matrix of the second target matrix; and write the second sub-matrix into the second storage space.

For example, the first target shape information corresponding to the target memory access cost, the second shape information corresponding to the target memory access cost and the third shape information corresponding to the target memory access cost may be respectively the first target shape information little_A34, the second shape information little_C3 and the third shape information little_B34. The first sub-matrix of the multiplicand matrix A may be loaded into the storage space L1A according to the first target shape information little_A34 corresponding to the target memory access cost. The shape of the first sub-matrix may be consistent with the first target shape information little_A34. The third sub-matrix of the multiplier matrix may be loaded into the storage space L1B according to the third shape information little_B34 corresponding to the target memory access cost. The shape of the third sub-matrix may be consistent with the third shape information little_B34. A matrix multiplication operation may be performed on the first sub-matrix and the third sub-matrix to obtain a second sub-matrix of the result matrix C. The shape of the second sub-matrix may be consistent with the second shape information little_C3. The second sub-matrix may be written into the storage space L1C.

For example, the first target shape information corresponding to the target memory access cost, the second shape information corresponding to the target memory access cost and the third shape information corresponding to the target memory access cost may be respectively the first target shape information little_B44, the second shape information little_C4 and the third shape information little_A44. The first sub-matrix of the multiplier matrix B may be loaded into the storage space L1B according to the first target shape information little_B44 corresponding to the target memory access cost. The shape of the first sub-matrix may be consistent with the first target shape information little_B44. The third sub-matrix of the multiplier matrix may be loaded into the storage space L1B according to the third shape information little_A44 corresponding to the target memory access cost. The shape of the third sub-matrix may be consistent with the third shape information little_A44. A matrix multiplication operation may be performed on the first sub-matrix and the third sub-matrix to obtain a second sub-matrix of the result matrix C. The shape of the second sub-matrix may be consistent with the second shape information little_C4. The second sub-matrix may be written into the storage space L1C.

It may be understood that the apparatus of processing data of the present disclosure has been described above, and an electronic device including the apparatus of processing data will be described below.

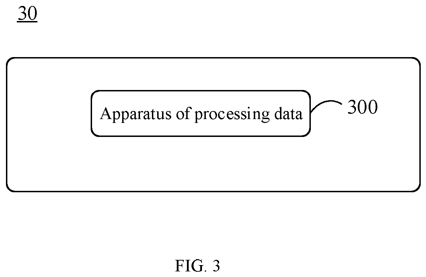

FIG. 3 shows a schematic diagram of an electronic device according to an embodiment of the present disclosure.

As shown in FIG. 3, an electronic device 30 includes an apparatus 300 of processing data provided in the present disclosure. The apparatus 300 of processing data is the apparatus 100 described above.

It may be understood that the electronic device of the present disclosure has been described above, and a method of processing data of the present disclosure will be described below.

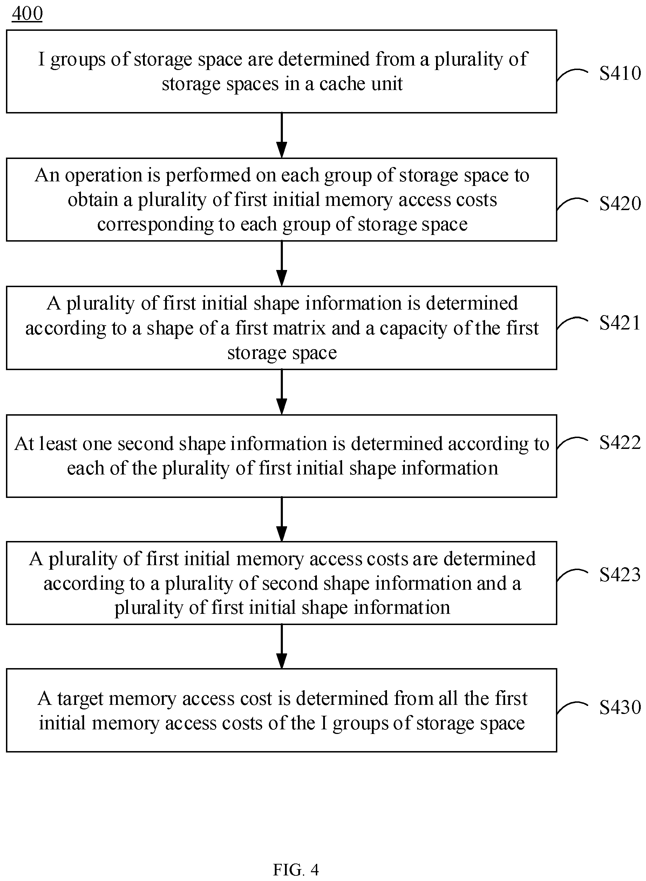

FIG. 4 shows a flowchart of a method of processing data according to an embodiment of the present disclosure.

As shown in FIG. 4, the method 400 includes operation S410 to operation S430.

In operation S410, I groups of storage space are determined from a plurality of storage spaces in a cache unit. Each of the I groups of storage space includes a first storage space and a second storage space.

In operation S420, an operation is performed on each group of storage space to obtain a plurality of first initial memory access costs corresponding to each group of storage space.

In operation S421, a plurality of first initial shape information is determined according to a shape of a first matrix and a capacity of the first storage space. The first matrix is a matrix corresponding to the first storage space.

In operation S422, at least one second shape information is determined according to each of the plurality of first initial shape information. The second shape information is related to a second matrix, and the second matrix is a matrix corresponding to the second storage space.

In operation S423, a plurality of first initial memory access costs are determined according to a plurality of second shape information and a plurality of first initial shape information.

In operation S430, a target memory access cost is determined from all the first initial memory access costs of the I groups of storage space. I is an integer greater than or equal to 1.

It may be understood that the method 400 may be performed using the processor 120 mentioned above.

In some embodiments, the operation performed on each group of storage space may further include: determining a plurality of first target shape information according to a plurality of second shape information and a plurality of first initial shape information. For example, the first initial shape information corresponds to at least one first target shape information. At least one second initial memory access cost is determined from the plurality of first initial memory access costs corresponding to each group of storage space, according to the plurality of first target shape information.

In some embodiments, determining at least one second initial memory access cost from the plurality of first initial memory access costs corresponding to each group of storage space includes: determining a plurality of third shape information according to the plurality of second shape information and the plurality of first target shape information. For example, the plurality of third shape information is related to a third matrix, and the third matrix is a matrix corresponding to the third storage space in each group of storage space. At least one second initial memory access cost is determined from the plurality of first initial memory access costs according to the plurality of first target shape information and the plurality of third shape information.

In some embodiments, determining the target memory access cost from all the first initial memory access costs of the I groups of storage space includes: determining the target memory access cost from all the second initial memory access costs of the I groups of storage space.

In some embodiments, the method 400 further includes: performing a matrix multiplication operation according to the first target shape information corresponding to the target memory access cost, the second shape information corresponding to the target memory access cost, and the third shape information corresponding to the target memory access cost.

In some embodiments, the plurality of matrices include a multiplier matrix, a multiplicand matrix, and a result matrix. The first matrix corresponding to the target memory access cost, the second matrix corresponding to the target memory access cost, and the third matrix corresponding to the target memory access cost are respectively a first target matrix, a second target matrix, and a third target matrix.

In some embodiments, performing a matrix multiplication operation includes: in a case that the third target matrix is the result matrix, loading a first sub-matrix of the first target matrix into the first storage space according to the first target shape information corresponding to the target memory access cost; loading a second sub-matrix of the second target matrix into the second storage space according to the second shape information corresponding to the target memory access cost; performing a matrix multiplication operation on the first sub-matrix and the second sub-matrix to obtain a third sub-matrix of the third target matrix; and writing the third sub-matrix into the third storage space.

In some embodiments, performing a matrix multiplication operation includes: in a case that the first target matrix is the result matrix, loading a third sub-matrix of the third target matrix into the third storage space according to the third shape information corresponding to the target memory access cost; loading a second sub-matrix of the second target matrix into the second storage space according to the second shape information corresponding to the target memory access cost; performing a matrix multiplication operation on the third sub-matrix and the second sub-matrix to obtain a first sub-matrix of the first target matrix; and writing the first sub-matrix into the first storage space.

In some embodiments, performing a matrix multiplication operation includes: in a case that the second target matrix is the result matrix, loading the first sub-matrix of the first target matrix into the first storage space according to the first target shape information corresponding to the target memory access cost; loading the third sub-matrix of the third target matrix into the third storage space according to the third shape information corresponding to the target memory access cost; performing a matrix multiplication operation on the first sub-matrix and the third sub-matrix to obtain a second sub-matrix of the second target matrix; and writing the second sub-matrix into the second storage space.

In technical solutions of the present disclosure, a collection, a storage, a use, a processing, a transmission, a provision, a disclosure, an application and other processing of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

According to embodiments of the present disclosure, the present disclosure further provides an electronic device (unclaimed embodiments), a readable storage medium, and a computer program product.

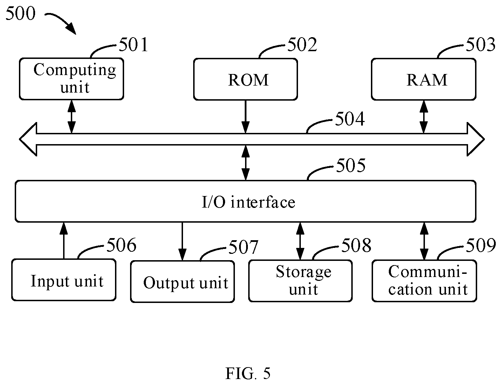

FIG. 5 shows a schematic block diagram of an example electronic device 500 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 5, the electronic device 500 includes a computing unit 501 which may perform various appropriate actions and processes according to a computer program stored in a read only memory (ROM) 502 or a computer program loaded from a storage unit 508 into a random access memory (RAM) 503. In the RAM 503, various programs and data necessary for an operation of the electronic device 500 may also be stored. The computing unit 501, the ROM 502 and the RAM 503 are connected to each other through a bus 504. An input/output (I/O) interface 505 is also connected to the bus 504.

A plurality of components in the electronic device 500 are connected to the I/O interface 505, including: an input unit 506, such as a keyboard, or a mouse; an output unit 507, such as displays or speakers of various types; a storage unit 508, such as a disk, or an optical disc; and a communication unit 509, such as a network card, a modem, or a wireless communication transceiver. The communication unit 509 allows the electronic device 500 to exchange information/data with other devices through a computer network such as Internet and/or various telecommunication networks.

The computing unit 501 may be various general-purpose and/or dedicated processing assemblies having processing and computing capabilities. Some examples of the computing units 501 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 501 executes various methods and processes described above, such as the method of processing data. For example, in some embodiments, the method of processing data may be implemented as a computer software program which is tangibly embodied in a machine-readable medium, such as the storage unit 508. In some embodiments, the computer program may be partially or entirely loaded and/or installed in the electronic device 500 via the ROM 502 and/or the communication unit 509. The computer program, when loaded in the RAM 503 and executed by the computing unit 501, may execute one or more steps in the method of processing data described above. Alternatively, in other embodiments, the computing unit 501 may be used to perform the method of processing data by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, a server for distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

**Claims**

1. An apparatus (100) of processing data, comprising:

   a cache unit (110), comprising a plurality of storage spaces;
   a processor (120), configured to:

   determine I groups of storage space from the plurality of storage spaces, wherein each of the I groups of storage space comprises a first storage space and a second storage space;
   perform an operation on each group of storage space to obtain a plurality of first initial memory access costs corresponding to the group of storage space, **characterized in that** the operation comprises:

   determining a plurality of first initial shape information according to a shape of a first matrix and a capacity of the first storage space, wherein the first matrix is a matrix corresponding to the first storage space;
   determining at least one second shape information according to each of the plurality of first initial shape information, wherein the second shape information is related to a second matrix, and the second matrix is a matrix corresponding to the second storage space; and
   determining the plurality of first initial memory access costs according to a plurality of second shape information and the plurality of first initial shape information; and

   determine a target memory access cost from all first initial memory access costs of the I groups of storage space, where I is an integer greater than or equal to 1.

2. The apparatus (100) according to claim 1, wherein the processor (120) is further configured to, for each group of storage space:

   determine a plurality of first target shape information according to the plurality of second shape information and the plurality of first initial shape information, wherein the first initial shape information corresponds to at least one of the plurality of first target shape information; and
   determine, according to the plurality of first target shape information, at least one second initial memory access cost from the plurality of first initial memory access costs corresponding to each group of storage space.

3. The apparatus (100) according to claim 2, wherein the processor (120) is further configured to, for each group of storage space:

   determine a plurality of third shape information according to the plurality of second shape information and the plurality of first target shape information, wherein the plurality of third shape information is related to a third matrix, and the third matrix is a matrix corresponding to a third storage space in each group of storage space; and
   determine the at least one second initial memory access cost from the plurality of first initial memory access costs according to the plurality of first target shape information and the plurality of third shape information.

4. The apparatus (100) according to claim 3, wherein the processor (120) is further configured to: determine the target memory access cost from all second initial memory access costs of the I groups of storage space.

5. The apparatus (100) according to claim 4, wherein the processor (120) is further configured to:
perform a matrix multiplication operation according to the first target shape information corresponding to the target memory access cost, the second shape information corresponding to the target memory access cost, and the third shape information corresponding to the target memory access cost.

6. The apparatus (100) according to claim 5, wherein the plurality of matrices comprise a multiplier matrix (220), a multiplicand matrix (210), and a result matrix (230), the first matrix corresponding to the target memory access cost is a first target matrix, the second matrix corresponding to the target memory access cost is a second target matrix, and the third matrix corresponding to the target memory access cost is a third target matrix.

7. The apparatus (100) according to claim 6, wherein the processor (120) is further configured to:

in response to the third target matrix being the result matrix (230),
load a first sub-matrix of the first target matrix into the first storage space according to the first target shape information corresponding to the target memory access cost;
load a second sub-matrix of the second target matrix into the second storage space according to the second shape information corresponding to the target memory access cost;
perform a matrix multiplication operation on the first sub-matrix and the second sub-matrix to obtain a third sub-matrix of the third target matrix; and
write the third sub-matrix into the third storage space.

8. The apparatus (100) according to claim 6, wherein the processor (120) is further configured to:

in response to the first target matrix being the result matrix (230),
load a third sub-matrix of the third target matrix into the third storage space according to the third shape information corresponding to the target memory access cost;
load a second sub-matrix of the second target matrix into the second storage space according to the second shape information corresponding to the target memory access cost;
perform a matrix multiplication operation on the third sub-matrix and the second sub-matrix to obtain a first sub-matrix of the first target matrix; and
write the first sub-matrix into the first storage space.

9. The apparatus (100) according to claim 6, wherein the processor (120) is further configured to:

in response to the second target matrix being the result matrix (230),
load a first sub-matrix of the first target matrix into the first storage space according to the first target shape information corresponding to the target memory access cost;
load a third sub-matrix of the third target matrix into the third storage space according to the third shape information corresponding to the target memory access cost;
perform a matrix multiplication operation on the first sub-matrix and the third sub-matrix to obtain a second sub-matrix of the second target matrix; and
write the second sub-matrix into the second storage space.

10. An electronic device (30), comprising the apparatus (100, 300) of processing data according to any one of claims 1 to 9.

11. A method (400) of processing data, comprising:

determining (S410) I groups of storage space from a plurality of storage spaces of a cache unit (110), wherein each of the I groups of storage space comprises a first storage space and a second storage space;
performing an operation (S420) on each group of storage space to obtain a plurality of first initial memory access costs corresponding to the group of storage space, **characterized in that** the operation comprises:

determining (S421) a plurality of first initial shape information according to a shape of a first matrix and a capacity of the first storage space, wherein the first matrix is a matrix corresponding to the first storage space;
determining (S422) at least one second shape information according to each of the plurality of first initial shape information, wherein the second shape information is related to a second matrix, and the second matrix is a matrix corresponding to the second storage space; and

determining (S423) the plurality of first initial memory access costs according to a plurality of second shape information and the plurality of first initial shape information; and

determining (S430) a target memory access cost from all first initial memory access costs of the I groups of storage space, where I is an integer greater than or equal to 1.

12. The method according to claim 11, wherein the operation performed (S420) on each group of storage space further comprises:

determining a plurality of first target shape information according to the plurality of second shape information and the plurality of first initial shape information, wherein the first initial shape information corresponds to at least one of the plurality of first target shape information; and
determining, according to the plurality of first target shape information, at least one second initial memory access cost from the plurality of first initial memory access costs corresponding to each group of storage space, and optionally, determining at least one second initial memory access cost from the plurality of first initial memory access costs corresponding to each group of storage space comprises:

determining a plurality of third shape information according to the plurality of second shape information and the plurality of first target shape information, wherein the plurality of third shape information is related to a third matrix, and the third matrix is a matrix corresponding to a third storage space in each group of storage space; and
determining the at least one second initial memory access cost from the plurality of first initial memory access costs according to the plurality of first target shape information and the plurality of third shape information.

13. A non-transitory computer-readable storage medium having computer instructions which, when executed by a computer, cause the computer to implement the method of claim 11 or 12.

14. A computer program product containing a computer program, wherein the computer program is configured to, when executed by a processor, implement the method of claim 11 or 12.

**Patentansprüche**

1. Vorrichtung (100) zur Verarbeitung von Daten, umfassend:

eine Cache-Einheit (110), die eine Vielzahl von Speicherplätzen umfasst;
einen Prozessor (120), der konfiguriert ist zum:

Bestimmen von I Gruppen von Speicherplatz aus der Vielzahl von Speicherplätzen, wobei jede der I Gruppen von Speicherplatz einen ersten Speicherplatz und einen zweiten Speicherplatz umfasst;
Durchführen einer Operation an jeder Gruppe von Speicherplatz, um eine Vielzahl von ersten anfänglichen Speicherzugriffskosten entsprechend der Gruppe von Speicherplatz zu erhalten, **dadurch gekennzeichnet, dass** die Operation umfasst:

Bestimmen einer Vielzahl von ersten anfänglichen Forminformationen entsprechend einer Form einer ersten Matrix und einer Kapazität des ersten Speicherplatzes, wobei die erste Matrix eine Matrix ist, die dem ersten Speicherplatz entspricht;
Bestimmen mindestens einer zweiten Forminformation entsprechend jeder der Vielzahl von ersten anfänglichen Forminformationen, wobei die zweite Forminformation mit einer zweiten Matrix in Beziehung steht, und die zweite Matrix eine Matrix ist, die dem zweiten Speicherplatz entspricht; und
Bestimmen der Vielzahl von ersten anfänglichen Speicherzugriffskosten entsprechend einer Vielzahl von zweiten Forminformationen und der Vielzahl von ersten anfänglichen Forminformationen; und
Bestimmen einer Zielspeicherzugriffskost aus allen ersten anfänglichen Speicherzugriffskosten der I Gruppen von Speicherplatz, wobei I eine ganze Zahl größer als oder gleich 1 ist.

2. Vorrichtung (100) nach Anspruch 1, wobei der Prozessor (120) ferner konfiguriert ist, für jede Gruppe von Speicherplatz:

eine Vielzahl von ersten Zielforminformationen entsprechend der Vielzahl von zweiten Forminformationen und der Vielzahl von ersten anfänglichen Forminformationen zu bestimmen, wobei die ersten anfänglichen Forminformationen mindestens einer der Vielzahl von ersten Zielforminformationen entsprechen; und entsprechend der Vielzahl von ersten Zielforminformationen mindestens eine zweite anfängliche Speicherzugriffskost aus der Vielzahl von ersten anfänglichen Speicherzugriffskosten entsprechend jeder Gruppe von Speicherplatz zu bestimmen.

3. Vorrichtung (100) nach Anspruch 2, wobei der Prozessor (120) ferner konfiguriert ist, für jede Gruppe von Speicherplatz:

eine Vielzahl von dritten Forminformationen entsprechend der Vielzahl von zweiten Forminformationen und der Vielzahl von ersten Zielforminformationen zu bestimmen, wobei die Vielzahl von dritten Forminformationen mit einer dritten Matrix in Beziehung steht, und die dritte Matrix eine Matrix ist, die einem dritten Speicherplatz in jeder Gruppe von Speicherplatz entspricht; und
die mindestens eine zweite anfängliche Speicherzugriffskost aus der Vielzahl von ersten anfänglichen Speicherzugriffskosten entsprechend der Vielzahl von ersten Zielforminformationen und der Vielzahl von dritten Forminformationen zu bestimmen.

4. Vorrichtung (100) nach Anspruch 3, wobei der Prozessor (120) ferner konfiguriert ist: die Zielspeicherzugriffskost aus allen zweiten anfänglichen Speicherzugriffskosten der I Gruppen von Speicherplatz zu bestimmen.

5. Vorrichtung (100) nach Anspruch 4, wobei der Prozessor (120) ferner konfiguriert ist:
eine Matrixmultiplikationsoperation entsprechend der ersten Zielforminformation entsprechend der Zielspeicherzugriffskost, der zweiten Forminformation entsprechend der Zielspeicherzugriffskost und der dritten Forminformation entsprechend der Zielspeicherzugriffskost durchzuführen.

6. Vorrichtung (100) nach Anspruch 5, wobei die Vielzahl von Matrizen eine Multiplikatormatrix (220), eine Multiplikandmatrix (210) und eine Ergebnismatrix (230) umfasst, die erste Matrix entsprechend der Zielspeicherzugriffskost eine erste Zielmatrix ist, die zweite Matrix entsprechend der Zielspeicherzugriffskost eine zweite Zielmatrix ist, und die dritte Matrix entsprechend der Zielspeicherzugriffskost eine dritte Zielmatrix ist.

7. Vorrichtung (100) nach Anspruch 6, wobei der Prozessor (120) ferner konfiguriert ist:

als Reaktion darauf, dass die dritte Zielmatrix die Ergebnismatrix (230) ist,
eine erste Teilmatrix der ersten Zielmatrix in den ersten Speicherplatz entsprechend der ersten Zielforminformation entsprechend der Zielspeicherzugriffskost zu laden;
eine zweite Teilmatrix der zweiten Zielmatrix in den zweiten Speicherplatz entsprechend der zweiten Forminformation entsprechend der Zielspeicherzugriffskost zu laden;
eine Matrixmultiplikationsoperation an der ersten Teilmatrix und der zweiten Teilmatrix durchzuführen, um eine dritte Teilmatrix der dritten Zielmatrix zu erhalten; und
die dritte Teilmatrix in den dritten Speicherplatz zu schreiben.

8. Vorrichtung (100) nach Anspruch 6, wobei der Prozessor (120) ferner konfiguriert ist:

als Reaktion darauf, dass die erste Zielmatrix die Ergebnismatrix (230) ist,
eine dritte Teilmatrix der dritten Zielmatrix in den dritten Speicherplatz entsprechend der dritten Forminformation entsprechend der Zielspeicherzugriffskost zu laden;
eine zweite Teilmatrix der zweiten Zielmatrix in den zweiten Speicherplatz entsprechend der zweiten Forminformation entsprechend der Zielspeicherzugriffskost zu laden;
eine Matrixmultiplikationsoperation an der dritten Teilmatrix und der zweiten Teilmatrix durchzuführen, um eine erste Teilmatrix der ersten Zielmatrix zu erhalten; und
die erste Teilmatrix in den ersten Speicherplatz zu schreiben.

9. Vorrichtung (100) nach Anspruch 6, wobei der Prozessor (120) ferner konfiguriert ist:

als Reaktion darauf, dass die zweite Zielmatrix die Ergebnismatrix (230) ist,
eine erste Teilmatrix der ersten Zielmatrix in den ersten Speicherplatz entsprechend der ersten Zielforminformation entsprechend der Zielspeicherzugriffskost zu laden;

eine dritte Teilmatrix der dritten Zielmatrix in den dritten Speicherplatz entsprechend der dritten Forminformation entsprechend der Zielspeicherzugriffskost zu laden;
eine Matrixmultiplikationsoperation an der ersten Teilmatrix und der dritten Teilmatrix durchzuführen, um eine zweite Teilmatrix der zweiten Zielmatrix zu erhalten; und
die zweite Teilmatrix in den zweiten Speicherplatz zu schreiben.

10. Elektronisches Gerät (30), das die Vorrichtung (100, 300) zur Verarbeitung von Daten nach einem der Ansprüche 1 bis 9 umfasst.

11. Verfahren (400) zur Verarbeitung von Daten, umfassend:

Bestimmen (S410) von I Gruppen von Speicherplatz aus einer Vielzahl von Speicherplätzen einer Cache-Einheit (110), wobei jede der I Gruppen von Speicherplatz einen ersten Speicherplatz und einen zweiten Speicherplatz umfasst;
Durchführen einer Operation (S420) an jeder Gruppe von Speicherplatz, um eine Vielzahl von ersten anfänglichen Speicherzugriffskosten entsprechend der Gruppe von Speicherplatz zu erhalten, **dadurch gekennzeichnet, dass** die Operation umfasst:

Bestimmen (S421) einer Vielzahl von ersten anfänglichen Forminformationen entsprechend einer Form einer ersten Matrix und einer Kapazität des ersten Speicherplatzes, wobei die erste Matrix eine Matrix ist, die dem ersten Speicherplatz entspricht;
Bestimmen (S422) mindestens einer zweiten Forminformation entsprechend jeder der Vielzahl von ersten anfänglichen Forminformationen, wobei die zweite Forminformation mit einer zweiten Matrix in Beziehung steht, und die zweite Matrix eine Matrix ist, die dem zweiten Speicherplatz entspricht; und
Bestimmen (S423) der Vielzahl von ersten anfänglichen Speicherzugriffskosten entsprechend einer Vielzahl von zweiten Forminformationen und der Vielzahl von ersten anfänglichen Forminformationen; und
Bestimmen (S430) einer Zielspeicherzugriffskost aus allen ersten anfänglichen Speicherzugriffskosten der I Gruppen von Speicherplatz, wobei I eine ganze Zahl größer als oder gleich 1 ist.

12. Verfahren nach Anspruch 11, wobei die an jeder Gruppe von Speicherplatz durchgeführte Operation (S420) ferner umfasst:

Bestimmen einer Vielzahl von ersten Zielforminformationen entsprechend der Vielzahl von zweiten Forminformationen und der Vielzahl von ersten anfänglichen Forminformationen, wobei die ersten anfänglichen Forminformationen mindestens einer der Vielzahl von ersten Zielforminformationen entsprechen; und
Bestimmen, entsprechend der Vielzahl von ersten Zielforminformationen, mindestens einer zweiten anfänglichen Speicherzugriffskost aus der Vielzahl von ersten anfänglichen Speicherzugriffskosten entsprechend jeder Gruppe von Speicherplatz, und
optional umfasst das Bestimmen mindestens einer zweiten anfänglichen Speicherzugriffskost aus der Vielzahl von ersten anfänglichen Speicherzugriffskosten entsprechend jeder Gruppe von Speicherplatz:

Bestimmen einer Vielzahl von dritten Forminformationen entsprechend der Vielzahl von zweiten Forminformationen und der Vielzahl von ersten Zielforminformationen, wobei die Vielzahl von dritten Forminformationen mit einer dritten Matrix in Beziehung steht, und die dritte Matrix eine Matrix ist, die einem dritten Speicherplatz in jeder Gruppe von Speicherplatz entspricht; und
Bestimmen der mindestens einen zweiten anfänglichen Speicherzugriffskost aus der Vielzahl von ersten anfänglichen Speicherzugriffskosten entsprechend der Vielzahl von ersten Zielforminformationen und der Vielzahl von dritten Forminformationen.

13. Nichtflüchtiges computerlesbares Speichermedium mit Computeranweisungen, die, wenn sie von einem Computer ausgeführt werden, den Computer veranlassen, das Verfahren nach Anspruch 11 oder 12 zu implementieren.

14. Computerprogrammprodukt, das ein Computerprogramm enthält, wobei das Computerprogramm konfiguriert ist, wenn es von einem Prozessor ausgeführt wird, das Verfahren nach Anspruch 11 oder 12 zu implementieren.

**Revendications**

1. Appareil (100) de traitement de données, comprenant :

    une unité de cache (110), comprenant une pluralité d'espaces de stockage ;
    un processeur (120), configuré pour :

       déterminer I groupes d'espace de stockage à partir de la pluralité d'espaces de stockage, dans lequel chacun des I groupes d'espace de stockage comprend un premier espace de stockage et un second espace de stockage ;
       effectuer une opération sur chaque groupe d'espace de stockage pour obtenir une pluralité de premiers coûts d'accès mémoire initiaux qui correspondent au groupe d'espace de stockage, **caractérisé en ce que** l'opération comprend :

          déterminer une pluralité de premières informations de forme initiales selon une forme d'une première matrice et une capacité du premier espace de stockage, dans lequel la première matrice est une matrice qui correspond au premier espace de stockage ;
          déterminer au moins une seconde information de forme selon chacune de la pluralité de premières informations de forme initiales, dans lequel la seconde information de forme est liée à une seconde matrice, et la seconde matrice est une matrice qui correspond au second espace de stockage ; et
          déterminer la pluralité de premiers coûts d'accès mémoire initiaux selon une pluralité de secondes informations de forme et la pluralité de premières informations de forme initiales ; et
          déterminer un coût d'accès mémoire cible à partir de tous les premiers coûts d'accès mémoire initiaux des I groupes d'espace de stockage, où I est un entier supérieur ou égal à 1.

2. Appareil (100) selon la revendication 1, dans lequel le processeur (120) est en outre configuré pour, pour chaque groupe d'espace de stockage :

    déterminer une pluralité de premières informations de forme cibles selon la pluralité de secondes informations de forme et la pluralité de premières informations de forme initiales, dans lequel les premières informations de forme initiales correspondent à au moins une de la pluralité de premières informations de forme cibles ; et
    déterminer, selon la pluralité de premières informations de forme cibles, au moins un second coût d'accès mémoire initial à partir de la pluralité de premiers coûts d'accès mémoire initiaux qui correspondent à chaque groupe d'espace de stockage.

3. Appareil (100) selon la revendication 2, dans lequel le processeur (120) est en outre configuré pour, pour chaque groupe d'espace de stockage :

    déterminer une pluralité de troisièmes informations de forme selon la pluralité de secondes informations de forme et la pluralité de premières informations de forme cibles, dans lequel la pluralité de troisièmes informations de forme est liée à une troisième matrice, et la troisième matrice est une matrice qui correspond à un troisième espace de stockage dans chaque groupe d'espace de stockage ; et
    déterminer le au moins un second coût d'accès mémoire initial à partir de la pluralité de premiers coûts d'accès mémoire initiaux selon la pluralité de premières informations de forme cibles et la pluralité de troisièmes informations de forme.

4. Appareil (100) selon la revendication 3, dans lequel le processeur (120) est en outre configuré pour : déterminer le coût d'accès mémoire cible à partir de tous les seconds coûts d'accès mémoire initiaux des I groupes d'espace de stockage.

5. Appareil (100) selon la revendication 4, dans lequel le processeur (120) est en outre configuré pour :
effectuer une opération de multiplication de matrice selon les premières informations de forme cibles qui correspondent au coût d'accès mémoire cible, les secondes informations de forme qui correspondent au coût d'accès mémoire cible, et les troisièmes informations de forme qui correspondent au coût d'accès mémoire cible.

6. Appareil (100) selon la revendication 5, dans lequel la pluralité de matrices comprend une matrice multiplicatrice (220), une matrice multiplicande (210), et une matrice de résultat (230), la première matrice qui correspond au coût d'accès mémoire cible est une première matrice cible, la seconde matrice qui correspond au coût d'accès mémoire cible est une seconde matrice cible, et la troisième matrice qui correspond au coût d'accès mémoire cible est une troisième matrice cible.

7. Appareil (100) selon la revendication 6, dans lequel le processeur (120) est en outre configuré pour :

en réponse à la troisième matrice cible étant la matrice de résultat (230),
charger une première sous-matrice de la première matrice cible dans le premier espace de stockage selon les premières informations de forme cibles qui correspondent au coût d'accès mémoire cible ;
charger une seconde sous-matrice de la seconde matrice cible dans le second espace de stockage selon les secondes informations de forme qui correspondent au coût d'accès mémoire cible ;
effectuer une opération de multiplication de matrice sur la première sous-matrice et la seconde sous-matrice pour obtenir une troisième sous-matrice de la troisième matrice cible ; et
écrire la troisième sous-matrice dans le troisième espace de stockage.

8. Appareil (100) selon la revendication 6, dans lequel le processeur (120) est en outre configuré pour :

en réponse à la première matrice cible étant la matrice de résultat (230),
charger une troisième sous-matrice de la troisième matrice cible dans le troisième espace de stockage selon les troisièmes informations de forme qui correspondent au coût d'accès mémoire cible ;
charger une seconde sous-matrice de la seconde matrice cible dans le second espace de stockage selon les secondes informations de forme qui correspondent au coût d'accès mémoire cible ;
effectuer une opération de multiplication de matrice sur la troisième sous-matrice et la seconde sous-matrice pour obtenir une première sous-matrice de la première matrice cible ; et
écrire la première sous-matrice dans le premier espace de stockage.

9. Appareil (100) selon la revendication 6, dans lequel le processeur (120) est en outre configuré pour :

en réponse à la seconde matrice cible étant la matrice de résultat (230),
charger une première sous-matrice de la première matrice cible dans le premier espace de stockage selon les premières informations de forme cibles qui correspondent au coût d'accès mémoire cible ;
charger une troisième sous-matrice de la troisième matrice cible dans le troisième espace de stockage selon les troisièmes informations de forme qui correspondent au coût d'accès mémoire cible ;
effectuer une opération de multiplication de matrice sur la première sous-matrice et la troisième sous-matrice pour obtenir une seconde sous-matrice de la seconde matrice cible ; et
écrire la seconde sous-matrice dans le second espace de stockage.

10. Dispositif électronique (30), comprenant l'appareil (100, 300) de traitement de données selon l'une quelconque des revendications 1 à 9.

11. Procédé (400) de traitement de données, comprenant :

déterminer (S410) I groupes d'espace de stockage à partir d'une pluralité d'espaces de stockage d'une unité de cache (110), dans lequel chacun des I groupes d'espace de stockage comprend un premier espace de stockage et un second espace de stockage ;
effectuer une opération (S420) sur chaque groupe d'espace de stockage pour obtenir une pluralité de premiers coûts d'accès mémoire initiaux qui correspondent au groupe d'espace de stockage, **caractérisé en ce que** l'opération comprend :

déterminer (S421) une pluralité de premières informations de forme initiales selon une forme d'une première matrice et une capacité du premier espace de stockage, dans lequel la première matrice est une matrice qui correspond au premier espace de stockage ;
déterminer (S422) au moins une seconde information de forme selon chacune de la pluralité de premières informations de forme initiales, dans lequel la seconde information de forme est liée à une seconde matrice, et la seconde matrice est une matrice qui correspond au second espace de stockage ; et
déterminer (S423) la pluralité de premiers coûts d'accès mémoire initiaux selon une pluralité de secondes informations de forme et la pluralité de premières informations de forme initiales ; et
déterminer (S430) un coût d'accès mémoire cible à partir de tous les premiers coûts d'accès mémoire initiaux des I groupes d'espace de stockage, où I est un entier supérieur ou égal à 1.

**12.** Procédé selon la revendication 11, dans lequel l'opération effectuée (S420) sur chaque groupe d'espace de stockage comprend en outre :

déterminer une pluralité de premières informations de forme cibles selon la pluralité de secondes informations de forme et la pluralité de premières informations de forme initiales, dans lequel les premières informations de forme initiales correspondent à au moins une de la pluralité de premières informations de forme cibles ; et

déterminer, selon la pluralité de premières informations de forme cibles, au moins un second coût d'accès mémoire initial à partir de la pluralité de premiers coûts d'accès mémoire initiaux qui correspondent à chaque groupe d'espace de stockage, et

optionnellement, déterminer au moins un second coût d'accès mémoire initial à partir de la pluralité de premiers coûts d'accès mémoire initiaux qui correspondent à chaque groupe d'espace de stockage comprend :

déterminer une pluralité de troisièmes informations de forme selon la pluralité de secondes informations de forme et la pluralité de premières informations de forme cibles, dans lequel la pluralité de troisièmes informations de forme est liée à une troisième matrice, et la troisième matrice est une matrice qui correspond à un troisième espace de stockage dans chaque groupe d'espace de stockage ; et

déterminer le au moins un second coût d'accès mémoire initial à partir de la pluralité de premiers coûts d'accès mémoire initiaux selon la pluralité de premières informations de forme cibles et la pluralité de troisièmes informations de forme.

**13.** Support de stockage lisible par ordinateur non transitoire ayant des instructions informatiques qui, lorsqu'elles sont exécutées par un ordinateur, amènent l'ordinateur à mettre en œuvre le procédé de la revendication 11 ou 12.

**14.** Produit de programme informatique contenant un programme informatique, dans lequel le programme informatique est configuré pour, lorsqu'il est exécuté par un processeur, mettre en œuvre le procédé de la revendication 11 ou 12.

100

Cache unit — 110

Processor — 120

FIG. 1

B — 220

211 —
212 —
210
A

C — 230

FIG. 2A

EP 4 398 112 B1

FIG. 2B

FIG. 2C

30

| |
|---|
| Apparatus of processing data — 300 |

FIG. 3

400

```
┌─────────────────────────────────────────────────────────┐
│ I groups of storage space are determined from a          │
│ plurality of storage spaces in a cache unit              │ ⌒ S410
└─────────────────────────────────────────────────────────┘
                          │
                          ▼
┌─────────────────────────────────────────────────────────┐
│ An operation is performed on each group of storage       │
│ space to obtain a plurality of first initial memory      │ ⌒ S420
│ access costs corresponding to each group of storage space│
└─────────────────────────────────────────────────────────┘
                          │
                          ▼
┌─────────────────────────────────────────────────────────┐
│ A plurality of first initial shape information is        │
│ determined according to a shape of a first matrix and a  │ ⌒ S421
│ capacity of the first storage space                      │
└─────────────────────────────────────────────────────────┘
                          │
                          ▼
┌─────────────────────────────────────────────────────────┐
│ At least one second shape information is determined       │ ⌒ S422
│ according to each of the plurality of first initial      │
│ shape information                                         │
└─────────────────────────────────────────────────────────┘
                          │
                          ▼
┌─────────────────────────────────────────────────────────┐
│ A plurality of first initial memory access costs are     │
│ determined according to a plurality of second shape      │ ⌒ S423
│ information and a plurality of first initial shape        │
│ information                                              │
└─────────────────────────────────────────────────────────┘
                          │
                          ▼
┌─────────────────────────────────────────────────────────┐
│ A target memory access cost is determined from all the   │ ⌒ S430
│ first initial memory access costs of the I groups of     │
│ storage space                                            │
└─────────────────────────────────────────────────────────┘
```

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021149716 A1